# EUROPÄISCHE PATENTSCHRIFT

(11) **EP 3 440 932 B1**
(45) Veröffentlichungstag und Bekanntmachung des Hinweises auf die Patenterteilung: **03.03.2021**
(21) Anmeldenummer: 18187795.2
(22) Anmeldetag: 07.08.2018
(51) Int. Cl.: A01M 7/00

(54) **AKTIVE SCHWINGUNGSDÄMPFUNG**
ACTIVE VIBRATION DAMPING
RÉGLAGE ACTIVE DES VIBRATIONS

(30) Priorität: 11.08.2017 DE 102017118302
(43) Veröffentlichungstag der Anmeldung: 13.02.2019
(73) Patentinhaber: Amazonen-Werke H. Dreyer GmbH & Co. KG, 49205 Hasbergen (DE)
(72) Erfinder: Austermann, Stefan, 48291 Telgte (DE); Borchert, Anna-Gret, 49090 Osnabrück (DE); große Prues, Frank, 49593 Bersenbrück (DE); Oberheide, Friedrich, 49143 Bissendorf (DE)

(56) Entgegenhaltungen:
- EP-A1- 2 982 243
- EP-A2- 1 716 754
- WO-A1-2017/029349
- US-A1- 2016 255 769
- US-A1- 2016 286 780
- US-A1- 2016 316 617

## Beschreibung

Die Erfindung betrifft ein Steuer- und/oder Regelsystem für ein landwirtschaftliches Nutzfahrzeug gemäß dem Oberbegriff des Patentanspruchs 1. Ferner betrifft die Erfindung ein landwirtschaftliches Nutzfahrzeug sowie ein Verfahren zur Steuerung und/oder Regelung eines landwirtschaftlichen Nutzfahrzeuges.

Derartige Systeme werden für landwirtschaftliche Nutzfahrzeuge zum Ausbringen von Material, wie Düngemittel, Pflanzenschutzmittel oder Saatgut verwendet. Um das Material großflächig und effizient auf dem zu bearbeitenden Feldboden auszubringen, weisen die landwirtschaftlichen Nutzfahrzeuge ein Verteilergestänge mit mehreren Sprühdüsen auf. Das Verteilergestänge erstreckt sich quer zur Fahrtrichtung und kann Arbeitsbreiten von bis zu 40 m aufweisen. Die Sprühdüsen, welche in regelmäßigem Abstand am Verteilergestänge angebracht sind, dienen der Ausbringung des Materials auf den zu bearbeitenden Boden.

Aufgrund der großen Arbeitsbreite und seitlichen Erstreckung des Verteilergestänges kann es im Arbeitsbetrieb des Nutzfahrzeuges, beispielhaft beim Abbremsen oder Beschleunigen, zu einem Aufschwingen des Verteilergestänges kommen. Die damit einhergehende unkontrollierte Bewegung des Verteilergestänges verursacht nicht nur eine inhomogene Verteilung des auszubringenden Materials auf dem Feldboden. Bei starken Beschleunigungskräften kann es überdies zur Überlastung des Verteilergestänges kommen, wodurch dieses in Extremfällen irreparabel beschädigt wird.

Als kritisch sind hierbei Gierschwingungen um eine Hochachse, bzw. horizontale Schwingungen, anzusehen. Mit horizontalen Schwingungen werden hauptsächlich Schwingungen in Fahrtrichtung, bzw. Schwingungen um eine Achse senkrecht auf den zu bearbeitenden Boden beschrieben. Sie bewirken, dass sich das Verteilergestänge mit seitlich unterschiedlichen Geschwindigkeiten über den Feldboden bewegt. Das Verteilergestänge schwankt dabei zwischen Umkehrpunkten hin und her, so dass zwischen den Umkehrpunkten eine Über- bzw. Unterdosierung auftreten kann. Mit anderen Worten führt die horizontale Gierschwingung zu einer nicht wünschenswerten inhomogenen Bedeckung des zu bearbeitenden Bodens und/oder Pflanzenbestandes.

Aus dem Stand der Technik sind verschiedene Maßnahmen bekannt, um derartige Schwingungen des Verteilergestänges zu dämpfen. Es wird auf die EP 2 837 285 A1 (gleich US2016316617) verwiesen. Bekanntermaßen weist das Verteilergestänge ein Mittelteil, beispielhaft einen mittig angeordneten Rahmen, und zwei mit dem Mittelteil verbundene seitliche Ausleger mit mehreren zueinander in Transportstellung einklappbaren und in Arbeitsstellung ausklappbaren, durch Gelenke verbundene Gestängeabschnitte auf. Es sind Stellmotoren und/oder einstellbare Dämpfersysteme mit veränderbaren Dämpfungseigenschaften vorgesehen, welche dem Verteilergestänge zugeordnet sind. Weiterhin ist eine Steuer- und Regeleinrichtung vorgesehen, welche basierend auf Messsignalen von Sensoren Stellsignale, bzw. Einstellparameter für die Stellmotoren und Dämpfungssysteme liefert.

Bei dem bekannten Dämpfungssystem findet als Reaktion auf die Schwingungsbewegungen des Verteilergestänges eine Einstellung der Dämpfung statt. Es wird mit einer aktiven Dämpfung mittels elektrorheologischer Dämpfer auf die auftretenden Schwingungen reagiert. Generell ist es von besonderem Vorteil, dass die Dämpfung von auftretenden Schwingungen schnellstmöglich erfolgt, damit ein Aufschwingen des Verteilergestänges frühzeitig verhindert werden kann. Bei manchen Fahrsituationen, wie beispielsweise bei einer beginnenden Kurvenfahrt, kann es allerdings erforderlich sein, die Dämpfung kontinuierlich zu erhöhen, je nach Krümmungsradius der zu fahrenden Kurve, da das Verteilergestänge in einer Kurvenfahrt sehr stark beschleunigt werden kann. Dies wiederum verursacht hohe mechanische Belastungen an den Koppelpunkten zwischen dem landwirtschaftlichen Nutzfahrzeug und dem Verteilergestänge. Bei dem bekannten Dämpfungssystem kann aber nur auf die auftretende Schwingung reagiert werden, und nicht auf den auslösenden Zustand der Schwingung, wie beispielhaft der Kurvenfahrt.

Der Erfindung liegt daher die Aufgabe zugrunde, ein Steuer- und/oder Regelsystem der eingangs genannten Art dahingehend zu verbessern, dass eine Dämpfung von Gierschwingungen um die Hochachse des Verteilergestänges situationsbedingt verbessert werden kann. Der Erfindung liegt ferner die Aufgabe zugrunde, ein landwirtschaftliches Nutzfahrzeug sowie ein Verfahren zur Steuerung und/oder Regelung eines landwirtschaftlichen Nutzfahrzeuges anzugeben.

Diese Aufgabe wird erfindungsgemäß durch ein Steuer- und/oder Regelsystem mit den Merkmalen des Anspruchs 1 gelöst. Im Hinblick auf das landwirtschaftliche Nutzfahrzeug wird die Aufgabe durch den Gegenstand des Anspruchs 10 gelöst. Ferner wird die Aufgabe im Hinblick auf das Verfahren durch den Gegenstand des Anspruchs 11 gelöst.

Die Erfindung beruht auf dem Gedanken, ein Steuer- und/oder Regelsystem für ein landwirtschaftliches Nutzfahrzeug anzugeben, welches ein Verteilergestänge zum Ausbringen von Material, wie Düngemittel, Pflanzenschutzmittel oder Saatgut umfasst, welches sich quer zur Fahrtrichtung erstreckt und ein Mittelteil und zwei mit dem Mittelteil durch Gelenke verbundene seitliche Ausleger mit mehreren zueinander in Transportstellung einklappbaren und in Arbeitsstellung ausklappbaren, durch Gelenke verbundene Gestängeabschnitte aufweist. Dem Verteilergestänge ist wenigstens eine Stelleinrichtung zugeordnet, wodurch das Verteilergestänge um eine Hochachse verschwenkbar angeordnet ist. Dem Nutzfahrzeug ist wenigstens ein Sensor zugeordnet. Das System weist eine Datenverarbeitungseinheit auf, welche derart konfiguriert ist, dass die Signale des Sensors verarbeitet werden und auf deren Basis ein Stellsignal für die Stelleinrichtung generiert wird. Die Datenverarbeitungseinheit ist derart konfiguriert, dass je nach unterschiedlichem Fahrzustand des landwirtschaftlichen Nutzfahrzeuges eine unterschiedliche Dämpfung von am Verteilergestänge auftretenden Gierschwingungen um die Hochachse einstellbar ist. Insbesondere erfolgt die Einstellung einer unterschiedlichen Dämpfung über die Einstellung eines unterschiedlichen Regelparameters je nach Fahrzustand. Mit anderen Worten wird über die Einstellung des Regelparameters die erforderliche Verstärkung zur Dämpfung von Gierschwingungen je nach Fahrzustand bestimmt.

Die Erfindung hat den Vorteil, dass nicht auf das aktuelle Problem, nämlich die unerwünscht auftretende Gierschwingung reagiert werden muss, sondern bereits frühzeitig die Ursache, nämlich ein Schwingungen auslösender Fahrzustand, berücksichtigt werden kann. Es kann somit direkt und unmittelbar auf die Schwingungen auslösende Fahrsituation, oder anders gesagt situationsbedingt reagiert werden. Somit lässt sich die Dämpfung bereits vorrauschauend an den gesamten Fahrzustand anpassen und einstellen. Beispielhaft bedeutet dies, dass bereits am Anfang einer Kurvenfahrt eine stärkere Dämpfung eingestellt werden kann, als basierend auf der auftretenden Schwingung am Kurvenanfang benötigt werden würde. Ein Aufschwingen des Verteilergestänges im Verlauf der Kurvenfahrt kann daher effizient und schnellstmöglich verhindert werden.

Im Rahmen der Anmeldung kann der Begriff der Stelleinrichtung sowohl hydraulische, als auch pneumatische, elektrische oder mechanische Systeme zur Dämpfung von Schwingungen umfassen. Es ist hierbei denkbar, dass die Stelleinrichtung Stellorgane, wie beispielsweise Hydraulikzylinder, und/oder Ventileinheiten und/oder Feder-Dämpfersysteme umfasst.

Weiterhin umfasst der Begriff des landwirtschaftlichen Nutzfahrzeuges im Rahmen der Anmeldung sowohl gezogene, selbstfahrende und getragene Maschinen. Demzufolge erstreckt sich die Erfindung auf Fahrzeugkombinationen, umfassend ein Zugfahrzeug und eine Maschine, auf selbstfahrende Maschinen sowie auf Maschinen, die direkt von einem Trägerfahrzeug bzw. einem Schlepper getragen sind, bei denen jeweils ein erfindungsgemäßes Steuer- und/oder Regelsystem vorgesehen ist. Somit kann auch der wenigstens eine Sensor, oder auch mehrere Sensoren, welcher oder welche dem Nutzfahrzeug zugeordnet ist oder sind, am Verteilergestänge und/oder am Zugfahrzeug und/oder an der selbstfahrenden oder von einem Trägerfahrzeug getragen oder gezogenen Maschine angeordnet sein.

Bevorzugte Ausführungsformen der Erfindung sind in den Unteransprüchen angegeben.

Bei einer bevorzugten Ausführungsform ist die Datenverarbeitungseinheit derart konfiguriert, dass eine Dämpfung von am Verteilergestänge auftretenden Gierschwingungen um die Hochachse in Abhängigkeit von wenigstens einem Fahrzustand des landwirtschaftlichen Nutzfahrzeuges einstellbar ist. Insbesondere kann eine unterschiedliche Dämpfung für unterschiedliche Fahrzustände eingestellt werden. Somit kann effizient das Aufschwingen des Verteilergestänges je nach Fahrsituation bereits frühzeitig verhindert werden.

Weiter vorzugsweise umfasst der wenigstens eine Fahrzustand eine Geradeausfahrt und/oder eine Kurvenfahrt des landwirtschaftlichen Nutzfahrzeuges. Da insbesondere bei Kurvenfahrten oder Wendevorgängen des landwirtschaftlichen Nutzfahrzeuges, beispielsweise an einem Vorgewende, starke Beschleunigungen wie beispielswiese Quer- und Längsbeschleunigungen am Verteilergestänge auftreten können, ist es besonders wünschenswert, die Dämpfung in Abhängigkeit der Kurvenfahrt einzustellen. Ebenso kann es bei Geradeausfahrt des Nutzfahrzeuges, beispielsweise bei einem Überfahren von Unebenheiten im Boden oder dem Fahrerrauschen, bzw. nicht zur Kurshaltung erforderlichen Lenkbewegungen des Bedieners, zu Gierschwingungen des Verteilergestänges kommen. Weiterhin kann es von besonderem Vorteil bei einer Geradeausfahrt sein, die Bewegung des Verteilergestänges möglichst von der Bewegung des landwirtschaftlichen Nutzfahrzeuges zu entkoppeln, damit sich möglich auftretende Gierschwingungen vom Nutzfahrzeug nicht auf das Verteilergestänge übertragen. Somit kann bei der Einstellung der Dämpfung bei einer Geradeausfahrt zwischen einer Bewegung des Nutzfahrzeuges bei gleichzeitiger Bewegung des Verteilergestänges oder einer Bewegung des Nutzfahrzeuges bei gleichzeitig ruhendem Verteilergestänge unterschieden werden. Dabei können unterschiedliche Dämpfungen, bzw. Regelparameter eingestellt werden. Generell kann durch die Berücksichtigung der Fahrzustände, der Geradeausfahrt oder Kurvenfahrt zur Einstellung der Dämpfung, der Ursache zur Auslösung von Gierschwingungen effizient entgegenwirkt werden.

Besonders bevorzugt ist bei einer Kurvenfahrt, insbesondere bei einer Änderung des Kurvenradius, eine unterschiedliche, insbesondere höhere, Dämpfung einstellbar als bei einem anderen Fahrzustand, insbesondere einer Geradeausfahrt. Hinsichtlich der Kurvenfahrt können insbesondere beim Übergang zwischen Geradeausfahrt und Kurvenfahrt, sowie bei einer Kurvenfahrt mit unterschiedlichen Kurvenradien kritische Beschleunigungen auftreten, die das Aufschwingen des Verteilergestänges begünstigen. Mittels der unterschiedlichen Einstellung der Dämpfung für unterschiedliche Fahrzustände kann jedoch optimal die Stärke von möglich auftretenden Schwingungen während des jeweiligen Fahrzustandes berücksichtigt werden. Vorteilhafterweise kann somit die Belastung auf das Verteilergestänge nahezu vollständig bei verschiedenen Fahrzuständen reduziert werden.

In einer weiteren bevorzugten Ausführungsform ist die Dämpfung nach dem Prinzip eines Zweipunkt-Reglers zur Beeinflussung der Dämpfungscharakteristik einstellbar, wobei für zwei verschiedene Fahrzustände des landwirtschaftlichen Nutzfahrzeuges jeweils ein diskreter Dämpfungswert vorgegeben ist. Insbesondere für die diskrete Unterteilung der Fahrzustände in Kurvenfahrt und Geradeausfahrt ist der Zweipunktregler zur Regelung von zwei diskreten Zuständen vorteilhaft. Weiterhin hat der Zweipunktregler den Vorteil eines einfachen Aufbaus und einer einfachen Einstellung.

In einer besonders bevorzugten Ausführungsform ist die Dämpfung nach dem Prinzip einer Skyhook-Regelung zur Beeinflussung der Dämpfungscharakteristik einstellbar. Die Skyhook ("Himmelshaken")-Regelung basiert auf der Reduzierung von störenden Umwelteinflüssen zur Auslösung von Schwingungen des Verteilergestänges. Dabei wird die Skyhook-Regelung maßgebend durch einen Skyhook-Parameter beeinflusst, welcher die einzustellende Dämpfungskraft beschreibt. Das Verteilergestänge, welches als schwingende Masse angesehen werden kann, kann mittels der eingestellten Dämpfung idealerweise fortwährend in Ruhe bleiben, wenn ein Dämpfer an einer "virtuellen Linie am Himmel" aufgehängt wird. Prinzipiell wirkt die Dämpfung somit nicht auf die Unebenheiten im Boden oder die Beschleunigungen in der Kurvenfahrt, sondern analog zu der virtuellen Himmelslinie. Dabei wirkt die Dämpfung, wenn sich das Verteilergestänge bewegt. Es kommt aber vorzugsweise nicht zu einer Anregung des Verteilergestänges zu Schwingungen bei äußerlich auftretenden Störungen. In der Praxis umfasst die Skyhook-Regelung eine Regelung der Dämpfungskonstante in Abhängigkeit der Geschwindigkeit des Verteilergestänges und/oder des Nutzfahrzeuges. Mittels am Nutzfahrzeug angebrachten Sensoren kann beispielhaft die Beschleunigung des Verteilergestänges erfasst werden und basierend darauf ein optimiertes Stellsignal für die Stelleinrichtung zur Verschwenkung des Verteilergestänges generiert werden. Demnach kann den auftretenden Gierschwingungen am Verteilergestänge entgegengewirkt werden.

Weiter vorzugsweise ist je nach Fahrzustand die Dämpfung nach dem Prinzip einer Skyhook-Regelung zur Beeinflussung der Dämpfungscharakteristik einstellbar. Demnach können für verschiedene Fahrzustände verschiedene Skyhook-Parameter zur Beschreibung der Skyhook-Regelung eingestellt und somit Unterschiede in der erforderlichen Dämpfung berücksichtigt werden.

Vorteilhafterweise ist eine erforderliche Dämpfungskraft zur Dämpfung von am Verteilergestänge auftretenden Gierschwingungen um die Hochachse durch eine Skyhook-Dämpfungskraft ermittelbar, wobei ein Skyhook Parameter mittels eines konstanten Wertes einstellbar ist. Die Dämpfungskraft umfasst hierbei generell das aufzubringende Dämpfungsmoment, um die auftretende Rotationsbewegung des Verteilergestänges um die Hochachse, bzw. die Gierschwingungen um die Hochachse zu dämpfen.

Weiter vorzugsweise ist eine erforderliche Dämpfungskraft zur Dämpfung von am Verteilergestänge auftretenden Gierschwingungen um die Hochachse durch eine Skyhook-Dämpfungskraft ermittelbar, wobei ein Skyhook Parameter mittels eines Zweipunkt-Reglers auf einen minimalen oder maximalen Wert einstellbar ist. Insbesondere für die diskrete Unterteilung der Fahrzustände in Kurvenfahrt und Geradeausfahrt ist der Zweipunktregler zur Regelung von zwei diskreten Zuständen vorteilhaft. Beispielhaft kann eine minimale Dämpfung für die Geradeausfahrt und eine maximale Dämpfung für die Kurvenfahrt eingestellt werden.

In einer weiteren Ausführungsform ist eine erforderliche Dämpfungskraft zur Dämpfung von am Verteilergestänge auftretenden Gierschwingungen um die Hochachse durch eine Skyhook-Dämpfungskraft ermittelbar, wobei ein Skyhook Parameter kontinuierlich einstellbar ist. Beispielsweise kann eine dynamische Regelung realisiert werden. Es sind somit für weitere unterschiedliche Fahrzustände verschiedene Dämpfungen einstellbar. Somit lassen sich weitere kritische Fahrzustände berücksichtigen, wo es zu einem unerwünschten Aufschwingen des Verteilergestänges kommen kann. Alternativ kann mittels des kontinuierlich einstellbaren Skyhook Parameters beispielsweise die Intensität des Fahrzustandes berücksichtigt werden. Insbesondere können bei einer Kurvenfahrt die Krümmungsradien der Kurve in der Regelung berücksichtigt, und somit die Stärke der auftretenden Beschleunigungskräfte miteinbezogen werden.

Besonders bevorzugt ist der Fahrzustand mittels des wenigstens einen Sensors erfassbar, wobei der Sensor zur Erfassung einer Drehrate des Verteilergestänges und/oder des Nutzfahrzeuges um die Hochachse und/oder zur Erfassung einer Auslenkung des Verteilergestänges und/oder zur Erfassung eines Lenkwinkels des Nutzfahrzeuges ausgebildet und dem landwirtschaftlichen Nutzfahrzeug zugeordnet ist. Vorzugsweise sind mehrere Sensoren dem landwirtschaftlichen Nutzfahrzeug zugeordnet, bzw. an diesem angeordnet. Dabei können die Sensoren am Verteilergestänge und/oder am Zugfahrzeug und/oder an der selbstfahrenden oder von einem Trägerfahrzeug getragen Maschine angeordnet sein, derart, dass eine Winkelgeschwindigkeit des Verteilergestänges und/oder des Zugfahrzeugs und/oder der selbstfahrenden oder von einem Trägerfahrzeug getragen Maschine ermittelt werden kann. Der Sensor kann hierzu insbesondere als Drehratensensor, Winkelsensor oder Beschleunigungssensor ausgebildet sein. Demnach lassen sich Rückschlüsse auf auftretende Gierschwingungen und weiterhin auch Rückschlüsse auf den aktuellen Fahrzustand des Nutzfahrzeuges, wie beispielsweise eine Kurvenfahrt oder Geradeausfahrt, ziehen.

Vorteilhafterweise ist basierend auf den Messdaten der Sensoren bei einer Überschreitung eines Grenzwertes die Dämpfung in Abhängigkeit des Fahrzustandes einstellbar. Beispielhaft kann ein Grenzwert zur Unterscheidung des Fahrzustandes definiert werden. Es kann somit präzise zwischen einer Geradeausfahrt oder Kurvenfahrt unterschieden werden. Je nach Fahrzustand kann somit die erforderliche Dämpfungskraft mithilfe der Messdaten der Sensoren eingestellt werden.

Besonders bevorzugt umfasst die Stelleinrichtung wenigstens einen Hydraulikzylinder, eine Hydraulikleitung, welche zur Zufuhr von Hydraulikflüssigkeit an den Hydraulikzylinder angeschlossen ist, und wenigstens eine hydraulische Ventileinheit und/oder weitere Dämpfungseinrichtungen, wobei die Ventileinheit jeweils über ein Stellsignal der Datenverarbeitungseinheit einstellbar ist. Generell hat der Einsatz einer Hydraulikflüssigkeit den Vorteil, dass die Reibung innerhalb der hydraulischen Einrichtung vermindert ist und gleichzeitig Korrosionsschutz gewährleistet werden kann. Die hydraulische Einrichtung kann generell als Aktor ausgebildet sein, um die elektrischen Stellsignale der Datenverarbeitungseinheit in eine mechanische Bewegung umzuwandeln und damit die Dämpfung von am Verteilergestänge auftretenden Gierschwingungen in Fahrtrichtung zu gewährleisten. Die hydraulische Ventileinheit sorgt hierbei vorteilhafterweise für einen sicheren und schnell wirkenden Überlastungsschutz des Hydraulikzylinders. Insgesamt kann der Hydraulikdruck am Hydraulikzylinder mittels der hydraulischen Ventileinheit, welche von der Datenverarbeitungseinheit mittels eines Stellsignals angesteuert werden kann, optimal eingestellt werden. Das Stellsignal bewirkt anders gesagt eine Zustandsänderung der Stelleinrichtung, wobei der Hydraulikzylinder derart verstellt werden kann, dass eine Zielgröße, nämlich die Dämpfung von auftretenden Schwingungen umgesetzt werden kann. Alternativ kann die Stelleinrichtung auch passive Systeme, wie beispielsweise mechanische Feder-Dämpfersysteme umfassen.

Weiter vorzugsweise enthält die hydraulische Ventileinheit wenigstens ein Ventil aus der Gruppe der Mehrwegeventile und/oder Druckregelventile und/oder Proportionalventile und/oder Drosseln und/oder Blenden zur Regelung des Hydraulikdrucks und/oder Anpassung der Dämpfung. Mittels derartiger Ventile kann sich vorteilhafterweise eine Kraftregelung realisieren lassen. Anders gesagt kann sich mithilfe der Ventile der Druck, bzw. die Kraft an den Hydraulikzylindern zur Kompensation der Schwingungen einstellen lassen. Dabei können vorzugsweise die Ventile mittels eines elektronischen Stellsignals von der Datenverarbeitungseinheit eingestellt werden. Weiterhin kann vorteilhafterweise die Feder- bzw. Dämpferrate, insbesondere je nach Fahrzustand, eingestellt werden.

In einer weiteren Ausführungsform umfassen die weiteren Dämpfungseinrichtungen einen Speicher und eine verstellbare Blende und/oder einen Speicher und ein Proportionalventil und/oder wenigstens eine verstellbare Drossel und/oder wenigstens zwei Proportionalventile und/oder einen Verstelldämpfer und/oder Federn zur Anpassung der Dämpfungsrate. Generell kann sich somit die Dämpfung von am Verteilergestänge auftretenden Schwingungen flexibel einstellen oder verändern lassen. Generell sind im Rahmen der Anmeldung jegliche Ventil- bzw. Dämpfungselemente und deren Kombinationen möglich, wodurch je nach Fahrzustand die Dämpfung von am Verteilergestänge auftretenden Gierschwingungen einstellbar ist.

Im Rahmen der vorliegenden Anmeldung wird weiterhin ein landwirtschaftliches Nutzfahrzeug zum Ausbringen von Material, wie Düngemittel, Pflanzenschutzmittel oder Saatgut, mit einem Steuer- und/oder Regelsystem nach einer der vorhergehenden Ausführungsformen beansprucht.

Weiterhin wird im Rahmen der vorliegenden Anmeldung ein Verfahren zur Steuerung und/oder Regelung eines landwirtschaftlichen Nutzfahrzeuges beansprucht, welches ein Steuer- und/oder Regelsystem und ein Verteilergestänge zum Ausbringen von Material, wie Düngemittel, Pflanzenschutzmittel oder Saatgut aufweist. Das Verteilergestänge erstreckt sich quer zur Fahrtrichtung und weist ein Mittelteil und zwei mit dem Mittelteil durch Gelenke verbundene seitliche Ausleger mit mehreren zueinander in Transportstellung einklappbaren und in Arbeitsstellung ausklappbaren, durch Gelenke verbundene Gestängeabschnitte auf. Dem Verteilergestänge ist wenigstens eine Stelleinrichtung zugeordnet, wodurch das Verteilergestänge um eine Hochachse verschwenkbar angeordnet ist. Dem Nutzfahrzeug ist wenigstens ein Sensor zugeordnet und das System weist eine Datenverarbeitungseinheit auf, welche derart konfiguriert ist, dass die Signale des Sensors verarbeitet werden und auf deren Basis ein Stellsignal für die Stelleinrichtung generiert wird. Je nach unterschiedlichem Fahrzustand des landwirtschaftlichen Nutzfahrzeuges wird eine unterschiedliche Dämpfung von am Verteilergestänge auftretenden Gierschwingungen um die Hochachse eingestellt.

Vorzugsweise wird eine Dämpfung von am Verteilergestänge auftretenden Gierschwingungen um die Hochachse in Abhängigkeit wenigstens eines Fahrzustands, insbesondere einer Geradeausfahrt oder einer Kurvenfahrt, des landwirtschaftlichen Nutzfahrzeuges eingestellt.

In einer bevorzugten Ausführungsform wird bei einer Kurvenfahrt, insbesondere bei einer Änderung des Kurvenradius, eine unterschiedliche, insbesondere höhere, Dämpfung eingestellt als bei einem anderen Fahrzustand, insbesondere einer Geradeausfahrt.

In einer weiteren Ausführungsform wird die Dämpfung nach dem Prinzip eines Zweipunkt-Reglers zur Beeinflussung der Dämpfungscharakteristik eingestellt, wobei für zwei verschiedene Fahrzustände des landwirtschaftlichen Nutzfahrzeuges jeweils ein diskreter Dämpfungswert vorgegeben wird.

Weiter vorzugsweise wird die Dämpfung nach dem Prinzip der Skyhook-Regelung zur Beeinflussung der Dämpfungscharakteristik eingestellt.

In einer bevorzugten Ausführungsform wird je nach Fahrzustand die Dämpfung nach dem Prinzip der Skyhook-Regelung zur Beeinflussung der Dämpfungscharakteristik eingestellt.

Vorteilhafterweise wird eine erforderliche Dämpfungskraft zur Dämpfung von am Verteilergestänge auftretenden Gierschwingungen um die Hochachse durch eine Skyhook-Dämpfungskraft ermittelt, wobei ein Skyhook Parameter mittels eines konstanten Wertes eingestellt wird.

Weiter vorteilhafterweise wird eine erforderliche Dämpfungskraft zur Dämpfung von am Verteilergestänge auftretenden Gierschwingungen um die Hochachse durch eine Skyhook-Dämpfungskraft ermittelt, wobei ein Skyhook Parameter mittels eines Zweipunkt-Reglers auf einen minimalen oder maximalen Wert eingestellt wird.

Vorzugsweise wird eine erforderliche Dämpfungskraft zur Dämpfung von am Verteilergestänge auftretenden Gierschwingungen um die Hochachse durch eine Skyhook-Dämpfungskraft ermittelt, wobei ein Skyhook Parameter kontinuierlich eingestellt wird.

In einer weiteren Ausführungsform wird basierend auf den Messdaten der Sensoren bei einer Überschreitung eines Grenzwertes die Dämpfung in Abhängigkeit des Fahrzustandes eingestellt.

Zu den Vorteilen des Verfahrens zur Steuerung und/oder Regelung eines landwirtschaftlichen Nutzfahrzeuges wird auf die im Zusammenhang mit dem Steuer- und/oder Regelsystem erläuterten Vorteile verwiesen. Darüber hinaus kann das Verfahren alternativ oder zusätzlich einzelne oder eine Kombination mehrerer zuvor in Bezug auf das Steuer- und/oder Regelsystem genannte Merkmale aufweisen.

Die Erfindung wird nachstehend mit weiteren Einzelheiten unter Bezug auf die beigefügten schematischen Zeichnungen näher erläutert. Die dargestellten Ausführungsformen stellen Beispiele dar, wie das erfindungsgemäße Steuer- und/oder Regelsystem ausgestaltet sein kann. Darin zeigen
- Fig. 1: eine perspektivische Detailansicht eines Verteilergestänges mit einem erfindungsgemäßen Steuer- und/oder Regelsystem und mit einem Mittelteil und zwei mit dem Mittelteil verbundenen seitlichen Ausleger;
- Fig. 2: einen schematischen Hydraulikschaltplan für ein Steuer- und/oder Regelsystems gemäß einem ersten erfindungsgemäßen Ausführungsbeispiel;
- Fig. 3: einen schematischen Hydraulikschaltplan für ein Steuer- und/oder Regelsystems gemäß einem weiteren erfindungsgemäßen Ausführungsbeispiel;
- Fig. 4: einen schematischen Hydraulikschaltplan für ein Steuer- und/oder Regelsystems gemäß einem dritten erfindungsgemäßen Ausführungsbeispiel;
- Fig. 5: einen schematischen Hydraulikschaltplan für ein Steuer- und/oder Regelsystems gemäß einem vierten erfindungsgemäßen Ausführungsbeispiel;
- Fig. 6: einen schematischen Hydraulikschaltplan für ein Steuer- und/oder Regelsystems gemäß einem fünften erfindungsgemäßen Ausführungsbeispiel;
- Fig. 7: einen schematischen Hydraulikschaltplan für ein Steuer- und/oder Regelsystems gemäß einem sechsten erfindungsgemäßen Ausführungsbeispiel;
- Fig. 8: einen schematischen Hydraulikschaltplan für ein Steuer- und/oder Regelsystems gemäß einem siebten erfindungsgemäßen Ausführungsbeispiel;
- Fig. 9: einen schematischen Hydraulikschaltplan für ein Steuer- und/oder Regelsystems gemäß einem achten erfindungsgemäßen Ausführungsbeispiel;
- Fig. 10: einen schematischen Hydraulikschaltplan für ein Steuer- und/oder Regelsystems gemäß einem neunten erfindungsgemäßen Ausführungsbeispiel;

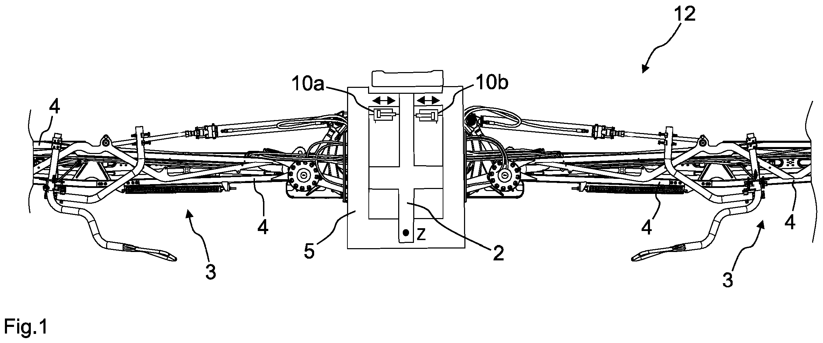

Fig. 1 zeigt eine perspektivische Detailansicht eines Verteilergestänges 12 mit einem erfindungsgemäßen Steuer- und/oder Regelsystem für ein landwirtschaftliches Nutzfahrzeug. Das Verteilergestänge 12 dient der Ausbringung von Material, wie Düngemittel, Pflanzenschutzmittel oder Saatgut und erstreckt sich quer zur Fahrtrichtung. Das Verteilergestänge 12 weist ein Mittelteil 2 und zwei mit dem Mittelteil 2 verbundene seitliche Ausleger 3 mit mehreren zueinander in Transportstellung einklappbaren und in Arbeitsstellung ausklappbaren, durch Gelenke verbundene Gestängeabschnitte 4 auf. Dem Verteilergestänge sind die Hydraulikzylinder 10 a, b zugeordnet, welche mit dem Mittelteil 2 und einem Hubrahmen 5 verbunden sind. Dabei sind die Hydraulikzylinder 10 a, b zwischen dem Mittelteil 2 und dem Hubrahmen 5 angeordnet. Mittels der Hydraulikzylinder 10 a, b ist das Verteilergestänge 12 um eine Hochachse verschwenkbar angeordnet.

Im Bereich des Verteilergestänges 12 und/oder am Nutzfahrzeug können nicht dargestellte Sensoren zur Erfassung von Gierschwingungen angebracht sein. Die Sensoren können beispielhaft als Drehratensensoren oder Beschleunigungssensoren ausgebildet sein. Die Messsignale der Sensoren können über Datenleitungen oder kabellos an eine nicht dargestellte Datenverarbeitungseinheit übermittelt werden. Die Datenverarbeitungseinheit ist derart konfiguriert, dass die Signale der Sensoren verarbeitet werden und auf deren Basis ein Stellsignal zur Einstellung der Hydraulikzylinder 10 a,b generiert wird.

Mittels der Datenverarbeitungseinheit können die Hydraulikzylinder 10 a,b derart angesteuert werden, dass am Verteilergestänge 12 auftretende Gierschwingungen gedämpft werden und das Verteilergestänge 12 in einer Solllage gehalten wird. Die Solllage des Verteilergestänges 12 zeichnet sich dadurch aus, dass keine Relativbewegung zwischen dem, das Verteilergestänge tragenden Nutzfahrzeug, und dem Verteilergestänge selbst, insbesondere in Fahrtrichtung, auftritt. Vorteilhafterweise ist die Datenverarbeitungseinheit derart konfiguriert ist, dass je nach unterschiedlichem Fahrzustand des landwirtschaftlichen Nutzfahrzeuges eine unterschiedliche Dämpfung von am Verteilergestänge 12 auftretenden Gierschwingungen um die Hochachse einstellbar ist. Insbesondere erfolgt die Einstellung der unterschiedlichen Dämpfung über die Einstellung eines unterschiedlichen Regelparameters je nach Fahrzustand. Mit anderen Worten wird über die Einstellung des Regelparameters die erforderliche Verstärkung zur Dämpfung von Gierschwingungen je nach Fahrzustand bestimmt.

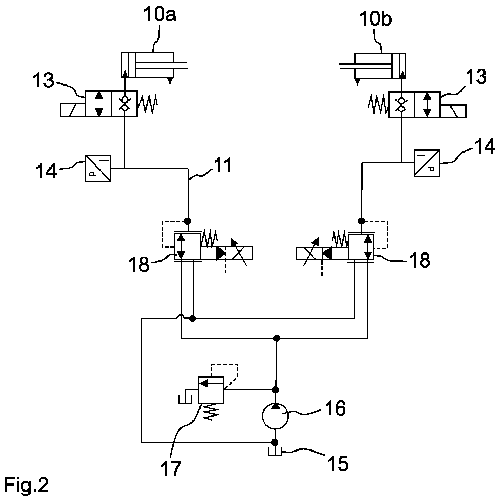

Zur detaillierten Einstellung der Hydraulikzylinder 10 a,b wird auf die Figuren 2-10 verwiesen. Die Figuren 2-10 zeigen schematische Prinzipdarstellungen eines Hydraulikschaltplans für ein Steuer- und/oder Regelsystem nach erfindungsgemäßen Ausführungsbeispielen. Es wird darauf hingewiesen, dass weitere Komponenten vorhanden sein können, aber für die einfache schematische Anordnung in den Figuren nicht dargestellt sind.

Fig. 2 zeigt einen schematischen Hydraulikschaltplan zur Einstellung von unterschiedlichen Dämpfungen von Gierschwingungen mit einem erfindungsgemäßen Steuer- und/oder Regelsystem für ein landwirtschaftliches Nutzfahrzeug. Das nicht dargestellte Nutzfahrzeug umfasst ein Verteilergestänge zum Ausbringen von Material, wie Düngemittel, Pflanzenschutzmittel oder Saatgut gemäß Fig. 1. Die beiden Hydraulikzylinder 10 a,b sind zur Einstellung der Dämpfung von am Verteilergestänge 12 auftretenden Gierschwingungen in Fahrtrichtung mit Druck beaufschlagbar. Die Hydraulikzylinder 10 a, b sind hierzu mit dem Verteilergestänge gemäß Fig. 1 wie oben beschrieben verbunden.

Alternativ kann anstatt der beiden Hydraulikzylinder 10 a,b auch ein Hydraulikzylinder mit zwei identischen Kolbenringflächen verwendet werden.

Weiterhin sind die beiden Hydraulikzylinder 10 a,b mittels einer gemeinsamen Hydraulikleitung 11 verbunden. Über die Hydraulikleitung 11 sind die Hydraulikzylinder 10 a, b mit einem Hydraulikreservoir verbunden. Das Hydraulikreservoir enthält eine Hydraulikflüssigkeit, welche über die Hydraulikleitung 11 dem jeweiligen Hydraulikzylinder 10 a, b zugeführt werden kann. Das Hydraulikreservoir umfasst beispielhaft einen Tank 15, eine Pumpe 16 und ein Druckbegrenzungsventil 17. Jedem Hydraulikzylinder 10 a,b ist ein Sperrventil 13 zum Fixieren des Hydraulikzylinders 10 a,b bei der Transportfahrt des Nutzfahrzeuges zugeordnet. Die Sperrventile 13 können in Arbeitsstellung des Verteilergestänges 12 dauerhaft offen gehalten werden.

Jedem Hydraulikzylinder 10 a,b ist ein Drucksensor 14 zugeordnet. Der Drucksensor 14 ist als Druckmessumformer ausgebildet. Der Druckmessumformer stellt generell einen elektrischen Messumformer zur Messung des vorhandenen Drucks, bzw. zur Kraftermittlung im Hydraulikzylinder 10 a, b dar. Somit ist mittels des Drucksensors 14 eine durch Gierschwingungen des Verteilergestänges 12 auftretende Druckänderung ermittelbar.

Weiterhin ist jedem Hydraulikzylinder 10 a, b eine hydraulische Ventileinheit zur Regelung des Hydraulikdrucks zugeordnet. Dabei ist die hydraulische Ventileinheit in der Hydraulikleitung 11 angeordnet und beispielhaft als Druckregelventil 18 ausgebildet. Die dem jeweiligen Hydraulikzylinder 10 a, b zugeordneten Drucksensoren 14 sind in der Hydraulikleitung 11 zwischen dem Hydraulikzylinder 10 a, b und dem zugehörigen Druckregelventil 18 angeordnet. Das Druckregelventil 18 wird von der nicht dargestellten Datenverarbeitungseinheit angesteuert und eingestellt. Hierzu ist das Druckregelventil 18 mit der Datenverarbeitungseinheit, beispielsweise über Kabelleitungen verbunden. Durch die Ansteuerung des Druckregelventils 18 über ein Stellsignal der Datenverarbeitungseinheit, kann der Druck an der Kolbenfläche des jeweiligen Hydraulikzylinders 10 a,b erhöht bzw. gesenkt werden, oder anders gesagt, der Kolben des Hydraulikzylinders 10 a, b ein- oder ausgefahren werden. Somit kann auftretenden Gierschwingungen dämpfend entgegengewirkt werden. Über das Stellsignal der Datenverarbeitungseinheit kann dabei je nach unterschiedlichem Fahrzustand des landwirtschaftlichen Nutzfahrzeuges eine unterschiedliche Dämpfung von am Verteilergestänge 12 auftretenden Gierschwingungen um die Hochachse eingestellt werden. Dazu kann der Druck an den Hydraulikzylindern 10 a,b über die, mittels des Stellsignals einstellbare Verstellung des Druckregelventils 18 variiert werden.

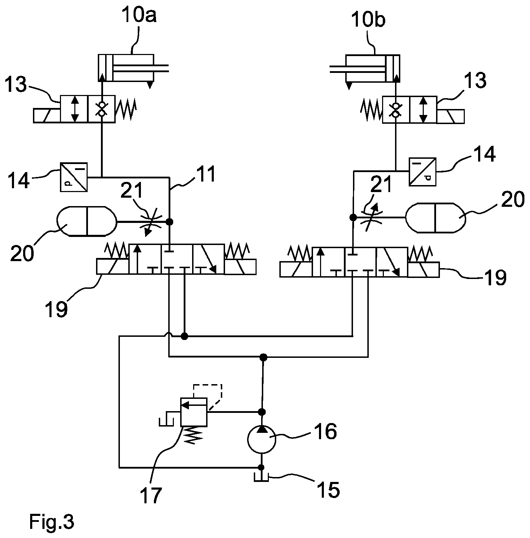

Fig. 3 zeigt eine weitere schematische Prinzipdarstellung eines Hydraulikschaltplans für ein Steuer- und/oder Regelsystem gemäß einem weiteren Ausführungsbeispiel. Der Aufbau des Hydraulikschaltplans ist analog zu Fig. 2. Im Gegensatz zu Fig. 2 ist anstelle eines Druckregelventils 18 jeweils ein Mehrwegeventil 19, ein Speicher 20 und eine verstellbare Drossel 21 dem jeweiligen Hydraulikzylinder 10 a,b zugeordnet. Das Mehrwegeventil 19 ist als 3-Wegeventil ausgebildet. Damit kann Hydraulikflüssigkeit zu- oder abgeführt werden.

Die verstellbare Drossel 21 ist zwischen dem Speicher 20 und dem Mehrwegeventil 19 in der Hydraulikleitung 11 angeordnet. Aufgrund der Drossel 21 in der Hydraulikleitung 11 zum Speicher 20, kann die Dämpfungsrate verstellt werden. Die Drossel 21 ist mittels einer einstellbaren Querschnittsverengung dazu ausgelegt, den Volumenstrom der Hydraulikflüssigkeit zur Druckbeaufschlagung einzustellen. Die Drossel 21 und auch das Mehrwegeventil 19 sind beispielhaft von der Datenverarbeitungseinheit ansteuerbar. Der Speicher 20 kann beispielhaft als Feder wirken. Insbesondere kann eine Federkennlinie des Speichers 20 mittels des Mehrwegeventils 19 durch Zuführung von Hydraulikflüssigkeit verstellt werden.

Weiterhin kann die Federkennlinie des Speichers 20 mittels einer Anpassung des Gleichgewichtsdrucks zwischen den beiden Hydraulikzylindern 10 a,b über das Mehrwegeventil 19 eingestellt werden. Insgesamt lässt sich durch die Ventilkombination des Mehrwegeventils 19 und der Drossel 21 mit dem Speicher 20, die Feder- und Dämpferrate zur Dämpfung von Gierschwingungen am Verteilergestänge je nach unterschiedlichem Fahrzustand des landwirtschaftlichen Nutzfahrzeuges einstellen.

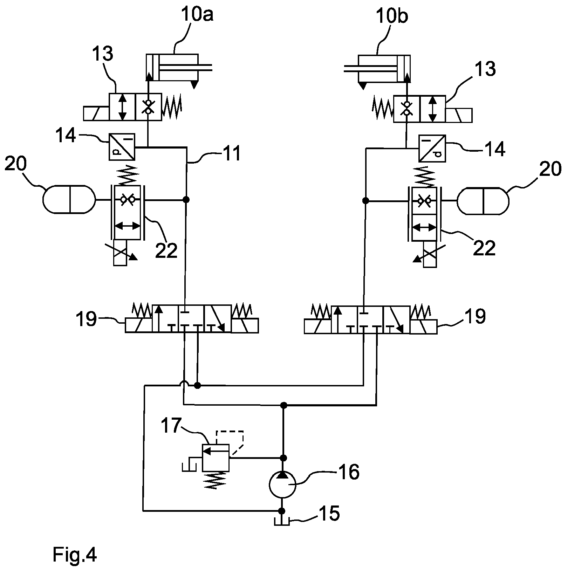

Fig. 4 zeigt eine weitere schematische Prinzipdarstellung eines Hydraulikschaltplans für ein Steuer- und/oder Regelsystem gemäß einem weiteren Ausführungsbeispiel. Der Aufbau des Hydraulikschaltplans ist analog zu Fig. 3. Im Gegensatz zu Fig. 3 ist jeweils anstelle der verstellbaren Drossel 21 ein Proportionalventil 22 vorgesehen. Das Proportionalventil 22 ist jeweils zwischen dem Speicher 20 und dem Mehrwegeventil 19 in der Hydraulikleitung 11 angeordnet. Das Proportionalventil 22 ist von der Datenverarbeitungseinheit ansteuerbar. Somit kann wie in Fig. 3 die Feder- und Dämpferrate zur Dämpfung von Gierschwingungen am Verteilergestänge je nach unterschiedlichem Fahrzustand des landwirtschaftlichen Nutzfahrzeuges eingestellt werden.

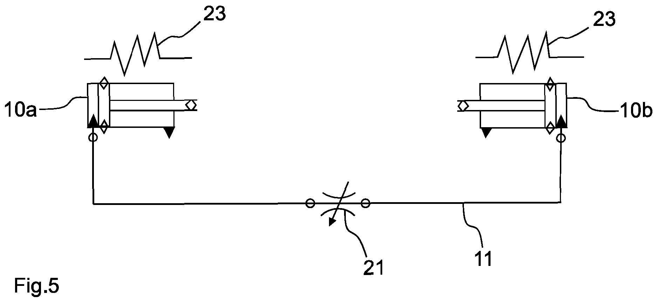

Fig. 5 zeigt eine weitere schematische Prinzipdarstellung eines Hydraulikschaltplans für ein Steuer- und/oder Regelsystem für ein landwirtschaftliches Nutzfahrzeug gemäß einem weiteren Ausführungsbeispiel. Das nicht dargestellte Nutzfahrzeug umfasst ein Verteilergestänge 12 zum Ausbringen von Material, wie Düngemittel, Pflanzenschutzmittel oder Saatgut gemäß Fig. 1. Die beiden Hydraulikzylinder 10 a,b sind zur Einstellung der Dämpfung von am Verteilergestänge 12 auftretenden Gierschwingungen in Fahrtrichtung mit Druck beaufschlagbar. Die Hydraulikzylinder 10 a, b sind hierzu mit dem Verteilergestänge gemäß Fig. 1 wie oben beschrieben verbunden.

Weiterhin sind die beiden Hydraulikzylinder 10 a,b mittels einer gemeinsamen Hydraulikleitung 11 verbunden. Den Hydraulikzylindern 10 a,b ist jeweils eine Feder 23 zugeordnet. Die Federn 23 können beispielhaft als Gummipuffer oder durch jeweils einen Speicher ausgebildet sein, welcher als hydraulische Feder wirken kann. In der Hydraulikleitung 11 ist eine verstellbare Drossel 21 angeordnet. Die Drossel 21 ist von der Datenverarbeitungseinheit mittels eines Stellsignals steuerbar. Über das Stellsignal kann eine Querschnittsverengung der Drossel 21 variiert werden, derart, dass der Volumenstrom der Hydraulikflüssigkeit in der Hydraulikleitung 11 eingestellt wird. Mittels der einstellbaren Drossel 21 kann somit die Dämpfung von am Verteilergestänge auftretenden Gierschwingungen je nach Fahrzustand unterschiedlich eingestellt werden.

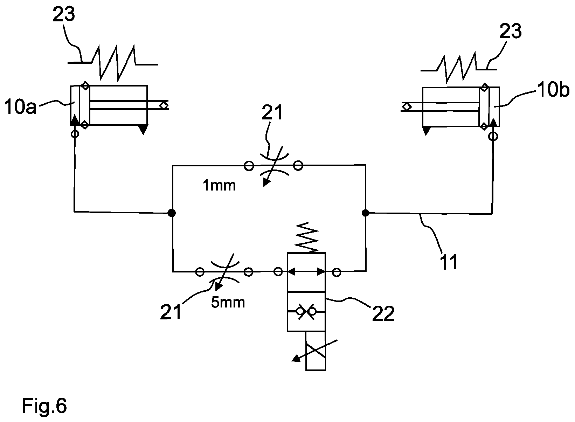

Fig. 6 zeigt eine weitere schematische Prinzipdarstellung eines Hydraulikschaltplans für ein Steuer- und/oder Regelsystem für ein landwirtschaftliches Nutzfahrzeug gemäß einem weiteren Ausführungsbeispiel. Der Aufbau des Hydraulikschaltplans ist analog zu Fig. 5. Anstelle der Drossel 21 in der Hydraulikleitung 11 sind zwei parallel geschaltete Drosseln 21 angeordnet. Einer Drossel 21 ist weiterhin ein Proportionalventil 22 zugeordnet. Mittels der Kombination aus zwei Drosseln 21 und einem Proportionalventil 22 kann zwischen zwei unterschiedlichen Dämpfungen veränderbar geschaltet werden. Dabei sind die Drosseln 21 und das Proportionalventil 22 von der Datenverarbeitungseinheit ansteuerbar. Dies ist insbesondere von Vorteil, um je nach Fahrzustand, wie beispielsweise der Kurvenfahrt oder Geradeausfahrt des Nutzfahrzeuges, eine unterschiedliche Dämpfung einzustellen. Es sind generell mehrere parallel geschaltete Ventil- und Drosselkombinationen zur Realisierung von weiteren unterschiedlichen Dämpfungen denkbar.

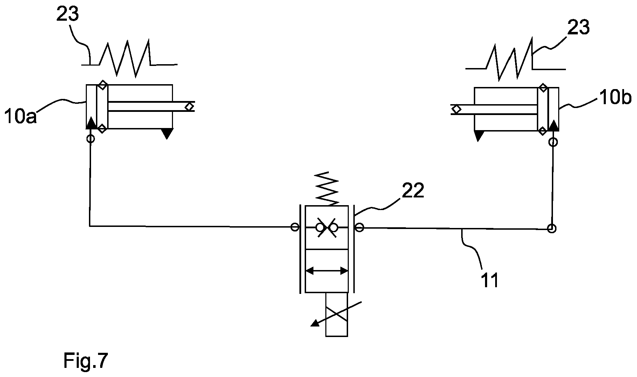

Fig. 7 zeigt eine weitere schematische Prinzipdarstellung eines Hydraulikschaltplans für ein Steuer- und/oder Regelsystem für ein landwirtschaftliches Nutzfahrzeug gemäß einem weiteren Ausführungsbeispiel. Der Aufbau des Hydraulikschaltplans ist analog zu Fig. 5. Anstelle der Drossel 21 in der Hydraulikleitung 11 ist ein Proportionalventil 22 angeordnet. Das Proportionalventil 22 ist von der Datenverarbeitungseinheit zur Einstellung der Dämpfung von auftretenden Gierschwingungen je nach Fahrzustand mittels eines Stellsignals ansteuerbar.

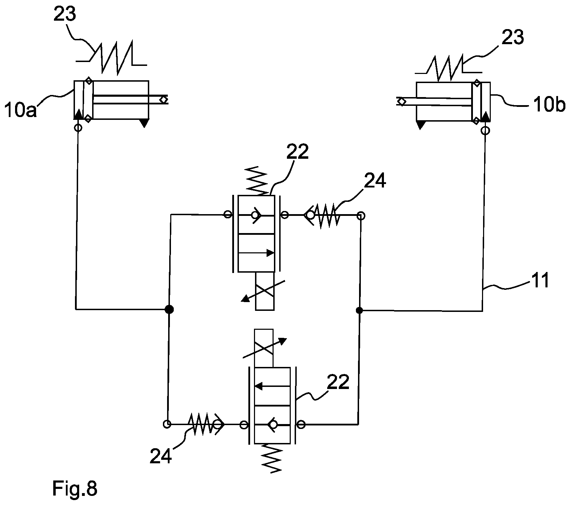

Fig. 8 zeigt eine weitere schematische Prinzipdarstellung eines Hydraulikschaltplans für ein Steuer- und/oder Regelsystem für ein landwirtschaftliches Nutzfahrzeug gemäß einem weiteren Ausführungsbeispiel. Der Aufbau des Hydraulikschaltplans ist analog zu Fig. 5. Anstelle der Drossel 21 in der Hydraulikleitung 11 sind zwei parallel geschaltete Proportionalventile 22 angeordnet. Jedem Proportionalventil 22 ist ein Rückschlagventil 24 zugeordnet. Das jeweilige Proportionalventil 22 ist von der Datenverarbeitungseinheit zur Einstellung der Dämpfung von auftretenden Gierschwingungen je nach Fahrzustand mittels eines Stellsignals ansteuerbar. Dabei sind die Proportionalventile 22 und die zugeordneten Rückschlagventile 24 derart in der Hydraulikleitung 11 angeordnet, dass eine richtungsabhängige Dämpfungsregelung realisierbar ist. Insbesondere kann mittels der Einstellung des jeweiligen Proportionalventils 22, die Dämpfung des Verteilergestänges 12 bei einer auftretenden rechtsseitigen oder linksseitigen Schwingungsbewegung des Verteilergestänges 12 eingestellt werden.

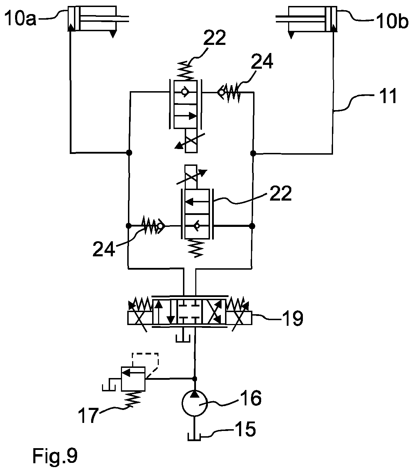

Fig. 9 zeigt eine weitere schematische Prinzipdarstellung eines Hydraulikschaltplans für ein Steuer- und/oder Regelsystem für ein landwirtschaftliches Nutzfahrzeug gemäß einem weiteren Ausführungsbeispiel. Der Aufbau des Hydraulikschaltplans ist analog zu Fig. 8.

Weiterhin ist den Hydraulikzylindern 10 a,b in der Hydraulikleitung 11 zentral angeordnet ein Mehrwegeventil 19 zugeordnet. Das Mehrwegeventil 19 ist beispielhaft als 4/3-Wegeventil ausgebildet. Mittels des Mehrwegeventils 19 kann zentral die Zufuhr von Hydraulikflüssigkeit für die Hydraulikzylinder 10 a,b gesteuert werden. Dabei ist das Mehrwegeventil 19 von der Datenverarbeitungseinheit steuerbar. Das Mehrwegeventil ist hierzu weiterhin mit einem Hydraulikreservoir verbunden, welches eine Pumpe 16, einen Tank 15 und ein Druckbegrenzungsventil 17 umfasst. Mittels der Proportionalventile 22 lässt sich eine richtungsabhängige Dämpfung von am Verteilergestänge 12 auftretenden Gierschwingungen je nach Fahrzustand realisieren.

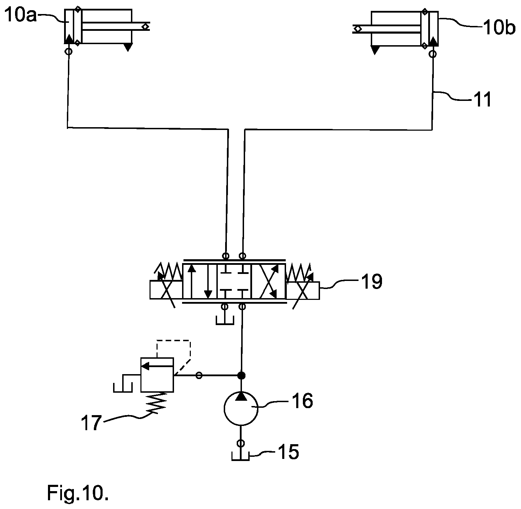

Fig. 10 zeigt eine weitere schematische Prinzipdarstellung eines Hydraulikschaltplans für ein Steuer- und/oder Regelsystem für ein landwirtschaftliches Nutzfahrzeug gemäß einem weiteren Ausführungsbeispiel. Der Aufbau des Hydraulikschaltplans ist analog zu Fig. 5.

Weiterhin ist anstelle der verstellbaren Drossel 21 ein Mehrwegeventil 19 in der Hydraulikleitung 11 angeordnet. Das Mehrwegeventil 19 ist beispielhaft als 4/3-Wegeventil ausgebildet. Mittels des Mehrwegeventils 19 kann zentral die Zufuhr von Hydraulikflüssigkeit für die Hydraulikzylinder 10 a,b gesteuert werden. Dabei ist das Mehrwegeventil 19 von der Datenverarbeitungseinheit steuerbar. Das Mehrwegeventil ist hierzu weiterhin mit einem Hydraulikreservoir verbunden, welches eine Pumpe 16, einen Tank 15 und ein Druckbegrenzungsventil 17 umfasst. Mittels des Mehrwegeventils 19 können die Hydraulikzylinder 10 a,b aktiv gesteuert und bewegt werden, um auftretende Gierschwingungen am Verteilergestänge 12 zu dämpfen.

Weiterhin können generell für alle Ausführungsbeispiele Dämpfungselemente, wie beispielhaft hubabhängige Dämpfer oder Verstelldämpfer mit Bypassbohrung angeordnet sein. Allgemein sind jegliche Ventil- bzw. Dämpfungselemente und deren Kombinationen möglich, wodurch je nach Fahrzustand die Dämpfung von am Verteilergestänge auftretenden Gierschwingungen einstellbar ist.

### Bezuqszeichenliste

- 2: Mittelteil
- 3: Ausleger
- 4: Gestängeabschnitt
- 5: Hubrahmen
- 10 a,b: Hydraulikzylinder
- 11: Hydraulikleitung
- 12: Verteilergestänge
- 13: Sperrventil
- 14: Drucksensor
- 15: Tank
- 16: Pumpe
- 17: Druckbegrenzungsventil
- 18: Druckregelventil
- 19: Mehrwegeventil
- 20: Speicher
- 21: Drossel
- 22: Proportionalventil
- 23: Feder
- 24: Rückschlagventil

## Patentansprüche

1. Steuer- und/oder Regelsystem für ein landwirtschaftliches Nutzfahrzeug, welches ein Verteilergestänge (12) zum Ausbringen von Material, wie Düngemittel, Pflanzenschutzmittel oder Saatgut umfasst, welches sich quer zur Fahrtrichtung erstreckt und ein Mittelteil (2) und zwei mit dem Mittelteil (2) durch Gelenke verbundene seitliche Ausleger (3) mit mehreren zueinander in Transportstellung einklappbaren und in Arbeitsstellung ausklappbaren, durch Gelenke verbundene Gestängeabschnitte (4) aufweist, wobei dem Verteilergestänge (12) wenigstens eine Stelleinrichtung zugeordnet ist, wodurch das Verteilergestänge (12) um eine Hochachse verschwenkbar angeordnet ist, und wobei dem Nutzfahrzeug wenigstens ein Sensor zugeordnet ist und das System eine Datenverarbeitungseinheit aufweist, welche derart konfiguriert ist, dass die Signale des Sensors verarbeitet werden und auf deren Basis ein Stellsignal für die Stelleinrichtung generiert wird, **dadurch gekennzeichnet, dass**
die Datenverarbeitungseinheit derart konfiguriert ist, dass je nach unterschiedlichem Fahrzustand des landwirtschaftlichen Nutzfahrzeuges eine unterschiedliche Dämpfung von am Verteilergestänge (12) auftretenden Gierschwingungen um die Hochachse einstellbar ist, wobei die Einstellung einer unterschiedlichen Dämpfung über die Einstellung eines unterschiedlichen Regelparameters je nach Fahrzustand erfolgt.

2. System nach Anspruch 1,
**dadurch gekennzeichnet, dass**
die Datenverarbeitungseinheit derart konfiguriert ist, dass eine Dämpfung von am Verteilergestänge (12) auftretenden Gierschwingungen um die Hochachse in Abhängigkeit von wenigstens einem Fahrzustand des landwirtschaftlichen Nutzfahrzeuges einstellbar ist.

3. System nach einem der vorhergehenden Ansprüche,
**dadurch gekennzeichnet, dass**
der wenigstens eine Fahrzustand eine Geradeausfahrt und/oder eine Kurvenfahrt des landwirtschaftlichen Nutzfahrzeuges umfasst, insbesondere wobei bei einer Kurvenfahrt, insbesondere bei einer Änderung des Kurvenradius, eine unterschiedliche, insbesondere höhere, Dämpfung einstellbar ist als bei einem anderen Fahrzustand, insbesondere einer Geradeausfahrt.

4. System nach einem der vorhergehenden Ansprüche,
**dadurch gekennzeichnet, dass**
die Dämpfung nach dem Prinzip eines Zweipunkt-Reglers zur Beeinflussung der Dämpfungscharakteristik einstellbar ist, wobei für zwei verschiedene Fahrzustände des landwirtschaftlichen Nutzfahrzeuges jeweils ein diskreter Dämpfungswert vorgegeben ist.

5. System nach einem der Ansprüche 1 bis 3,
**dadurch gekennzeichnet, dass**
die Dämpfung nach dem Prinzip einer Skyhook-Regelung zur Beeinflussung der Dämpfungscharakteristik einstellbar ist, insbesondere wobei je nach Fahrzustand die Dämpfung nach dem Prinzip einer Skyhook-Regelung zur Beeinflussung der Dämpfungscharakteristik einstellbar ist.

6. System nach Anspruch 5,
**dadurch gekennzeichnet, dass**
eine erforderliche Dämpfungskraft zur Dämpfung von am Verteilergestänge (12) auftretenden Gierschwingungen um die Hochachse durch eine Skyhook-Dämpfungskraft ermittelbar ist, wobei ein Skyhook-Parameter mittels eines konstanten Wertes einstellbar ist; oder eine erforderliche Dämpfungskraft zur Dämpfung von am Verteilergestänge (12) auftretenden Gierschwingungen um die Hochachse durch eine Skyhook-Dämpfungskraft ermittelbar ist, wobei ein Skyhook-Parameter mittels eines Zweipunkt-Reglers auf einen minimalen oder maximalen Wert einstellbar ist; oder
eine erforderliche Dämpfungskraft zur Dämpfung von am Verteilergestänge (12) auftretenden Gierschwingungen um die Hochachse durch eine Skyhook-Dämpfungskraft ermittelbar ist, wobei ein Skyhook-Parameter kontinuierlich einstellbar ist.

7. System nach einem der vorhergehenden Ansprüche,
**dadurch gekennzeichnet, dass**
der Fahrzustand mittels des wenigstens einen Sensors erfassbar ist, wobei der Sensor zur Erfassung einer Drehrate des Verteilergestänges (12) und/oder des Nutzfahrzeuges um die Hochachse und/oder zur Erfassung einer Auslenkung des Verteilergestänges (12) und/oder zur Erfassung eines Lenkwinkels des Nutzfahrzeuges ausgebildet und dem landwirtschaftlichen Nutzfahrzeug zugeordnet ist.

8. System nach einem der vorhergehenden Ansprüche,
**dadurch gekennzeichnet, dass**
basierend auf den Messdaten der Sensoren bei einer Überschreitung eines Grenzwertes die Dämpfung in Abhängigkeit des Fahrzustandes einstellbar ist.

9. System nach einem der vorhergehenden Ansprüche,
**dadurch gekennzeichnet, dass**
die Stelleinrichtung wenigstens einen Hydraulikzylinder (10 a,b), eine Hydraulikleitung (11), welche zur Zufuhr von Hydraulikflüssigkeit an den Hydraulikzylinder (10 a,b) angeschlossen ist, und wenigstens eine hydraulische Ventileinheit und/oder weitere Dämpfungseinrichtungen umfasst, wobei die Ventileinheit jeweils über ein Stellsignal der Datenverarbeitungseinheit einstellbar ist;
insbesondere wobei:
die hydraulische Ventileinheit wenigstens ein Ventil aus der Gruppe der Mehrwegeventile (19) und/oder Druckregelventile (18) und/oder Proportionalventile (22) und/oder Drosseln (21) und/oder Blenden zur Regelung des Hydraulikdrucks und/oder Anpassung der Dämpfung enthält; und/oder
die weiteren Dämpfungseinrichtungen einen Speicher (20) und eine verstellbare Blende und/oder einen Speicher (20) und ein Proportionalventil (22) und/oder wenigstens eine verstellbare Drossel (21) und/oder wenigstens zwei Proportionalventile (22) und/oder einen Verstelldämpfer und/oder Federn zur Anpassung der Dämpfungsrate umfassen.

10. Landwirtschaftliches Nutzfahrzeug zum Ausbringen von Material, wie Düngemittel, Pflanzenschutzmittel oder Saatgut, mit einem Steuer- und/oder Regelsystem nach einem der vorhergehenden Ansprüche.

11. Verfahren zur Steuerung und/oder Regelung eines landwirtschaftliches Nutzfahrzeuges, welches ein Steuer- und/oder Regelsystem und ein Verteilergestänge (12) zum Ausbringen von Material, wie Düngemittel, Pflanzenschutzmittel oder Saatgut umfasst, welches sich quer zur Fahrtrichtung erstreckt und ein Mittelteil (2) und zwei mit dem Mittelteil (2) durch Gelenke verbundene seitliche Ausleger (3) mit mehreren zueinander in Transportstellung einklappbaren und in Arbeitsstellung ausklappbaren, durch Gelenke verbundene Gestängeabschnitte (4) aufweist, wobei dem Verteilergestänge (12) wenigstens eine Stelleinrichtung zugeordnet ist, wodurch das Verteilergestänge (12) um eine Hochachse verschwenkbar angeordnet ist, und wobei dem Nutzfahrzeug wenigstens ein Sensor zugeordnet ist und das System eine Datenverarbeitungseinheit aufweist, welche derart konfiguriert ist, dass die Signale des Sensors verarbeitet werden und auf deren Basis ein Stellsignal für die Stelleinrichtung generiert wird,
**dadurch gekennzeichnet, dass**
je nach unterschiedlichem Fahrzustand des landwirtschaftlichen Nutzfahrzeuges eine unterschiedliche Dämpfung von am Verteilergestänge (12) auftretenden Gierschwingungen um die Hochachse eingestellt wird, wobei die Einstellung einer unterschiedlichen Dämpfung über die Einstellung eines unterschiedlichen Regelparameters je nach Fahrzustand erfolgt.

12. Verfahren nach Anspruch 11,
**dadurch gekennzeichnet, dass**
eine Dämpfung von am Verteilergestänge (12) auftretenden Gierschwingungen um die Hochachse in Abhängigkeit wenigstens eines Fahrzustands, insbesondere einer Geradeausfahrt oder einer Kurvenfahrt, des landwirtschaftlichen Nutzfahrzeuges eingestellt wird; insbesondere wobei bei einer Kurvenfahrt, insbesondere bei einer Änderung des Kurvenradius, eine unterschiedliche, insbesondere höhere, Dämpfung eingestellt wird als bei einem anderen Fahrzustand, insbesondere einer Geradeausfahrt.

13. Verfahren nach einem der Ansprüche 11 bis 12,
**dadurch gekennzeichnet, dass**
die Dämpfung nach dem Prinzip eines Zweipunkt-Reglers zur Beeinflussung der Dämpfungscharakteristik eingestellt wird, wobei für zwei verschiedene Fahrzustände des landwirtschaftlichen Nutzfahrzeuges jeweils ein diskreter Dämpfungswert vorgegeben wird.

14. Verfahren nach einem der Ansprüche 11 bis 13,
**dadurch gekennzeichnet, dass**
die Dämpfung nach dem Prinzip der Skyhook-Regelung zur Beeinflussung der Dämpfungscharakteristik eingestellt wird; insbesondere wobei je nach Fahrzustand die Dämpfung nach dem Prinzip der Skyhook-Regelung zur Beeinflussung der Dämpfungscharakteristik eingestellt wird;
insbesondere wobei:
eine erforderliche Dämpfungskraft zur Dämpfung von am Verteilergestänge (12) auftretenden Gierschwingungen um die Hochachse durch eine Skyhook-Dämpfungskraft ermittelt wird, wobei ein Skyhook-Parameter mittels eines konstanten Wertes eingestellt wird; oder eine erforderliche Dämpfungskraft zur Dämpfung von am Verteilergestänge (12) auftretenden Gierschwingungen um die Hochachse durch eine Skyhook-Dämpfungskraft ermittelt wird, wobei ein Skyhook-Parameter mittels eines Zweipunkt-Reglers auf einen minimalen oder maximalen Wert eingestellt wird; oder
eine erforderliche Dämpfungskraft zur Dämpfung von am Verteilergestänge (12) auftretenden Gierschwingungen um die Hochachse durch eine Skyhook-Dämpfungskraft ermittelt wird, wobei ein Skyhook-Parameter kontinuierlich eingestellt wird.

15. Verfahren nach einem der Ansprüche 11 bis 14, **dadurch gekennzeichnet, dass** basierend auf den Messdaten der Sensoren bei einer Überschreitung eines Grenzwertes die Dämpfung in Abhängigkeit des Fahrzustandes eingestellt wird.

## Claims

1. Open-loop and/or closed-loop control system for an agricultural utility vehicle which comprises a distributor linkage (12) for discharging materials as fertilizer, crop protection agent or seed, which distributor linkage (12) extends transversely with respect to the direction of travel and has a central part (2) and two lateral booms (3) which are connected to the central part (2) by joints and have a plurality of linkage sections (4) which can be folded in with respect to one another into the transportation position and folded out into the working position and are connected by joints, wherein at least one actuating device is assigned to the distributor linkage (12), wherein the distributor linkage (12) is arranged so as to be pivotable about a vertical axis, and wherein at least one sensor is assigned to the utility vehicle, and the system has a data-processing unit which is configured in such a way that the signals of the sensor are processed, and an actuator signal for the actuating device is generated on the basis thereof,
**characterized in that**
the data processing unit is configured in such a way that depending on the different driving state of the agricultural utility vehicle it is possible to set different damping of yawing oscillations, occurring at the distributor linkage (12), about the vertical axis, wherein the setting of different damping is effected by setting a different control parameter for each driving state.

2. System according to Claim 1,
**characterized in that**
the data-processing unit is configured in such a way that damping of yawing oscillations, occurring at the distributor linkage (12), about the vertical axis can be set as a function of at least one driving state of the agricultural utility vehicle.

3. System according to one of the preceding claims, **characterized in that**
the at least one driving state comprises straight-ahead travel and/or cornering of the agricultural utility vehicle, in particular wherein in the case of cornering, in particular in the case of a change in the turning radius, different, in particular higher, damping can be set than in another driving state, in particular straight-ahead travel.

4. System according to one of the preceding claims, **characterized in that**
the damping can be set according to the principle of a two-point controller for influencing the damping characteristic, wherein a discrete damping value can be respectively set for two different driving states of the agricultural utility vehicle.

5. System according to one of Claims 1 to 3, **characterized in that**
the damping can be set according to the principle of sky hook control for influencing the damping characteristic, in particular wherein depending on the driving state the damping can be set according to the principle of sky hook control for influencing the damping characteristic.

6. System according to Claim 5,
**characterized in that**
a necessary damping force for damping yawing oscillations, occurring at the distributor linkage (12), about the vertical axis can be determined by means of a skyhook damping force, wherein a sky hook parameter can be set by means of a constant value; or a necessary damping force for damping yawing oscillations, occurring at the distributor linkage (12), about the vertical axis can be determined by means of a sky hook damping force, wherein a sky hook parameter can be set to a minimum value or maximum value by means of a two-point controller; or
a necessary damping force for damping yawing oscillations, occurring at the distributor linkage (12), about the vertical axis can be determined by means of a sky hook damping force, wherein a sky hook parameter can be set continuously.

7. System according to one of the preceding claims, **characterized in that**
the driving state can be sensed by means of the at least one sensor, wherein the sensor is designed to sense a rotational speed of the distributor linkage (12) and/or of the utility vehicle about the vertical axis and/or to sense a deflection of the distributor link (12) and/or to sense a steering angle of the utility vehicle, and is assigned to the agricultural utility vehicle.

8. System according to one of the preceding claims, **characterized in that**
when a limiting value is exceeded, the damping can be set as a function of the driving state on the basis of the measurement data of the sensors.

9. System according to one of the preceding claims, **characterized in that**
the actuating device comprises at least one hydraulic cylinder (10a,b), one hydraulic line (11) which is connected to the hydraulic cylinder (10a,b) in order to supply hydraulic fluid, and at least one hydraulic valve unit and/or further damping devices, wherein the valve unit can be respectively set by means of an actuation signal and the data processing unit;
in particular wherein:
the hydraulic valve unit contains at least one valve from the group of multi-port valves (19) and/or pressure control valves (18) and/or proportional valves (22) and/or restrictors (21) and/or orifices for controlling the hydraulic pressure and/or adapting the damping; and/or
the further damping devices comprise an accumulator (20) and an adjustable orifice and/or an accumulator (20) and a proportional valve (22) and/or at least one adjustable restrictor (21) and/or at least two proportional valves (22) and/or an adjustment damper and/or springs for adapting the damping rate.

10. Agricultural utility vehicle for discharging material, such as fertilizer, crop protection agent or seed, having an open-loop and/or closed-loop control system according to one of the preceding claims.

11. Method for performing open-loop and/or closed-loop control of an agricultural utility vehicle which comprises an open-loop and/or closed-loop control system and a distributor linkage (12) for discharging material, such as fertilizer, crop protection agent or seed, which distributor linkage (12) extends transversely with respect to the direction of travel and has a central part (2) and two lateral booms (3) which are connected to the central part (2) by joints and have a plurality of linkage sections (4) which can be folded in with respect to one another into the transportation position and folded out into the working position and are connected by joints, wherein at least one actuating device is assigned to the distributor linkage (12), wherein the distributor linkage (12) is arranged so as to be pivotable about a vertical axis, and wherein at least one sensor is assigned to the utility vehicle, and the system has a data-processing unit which is configured in such a way that the signals of the sensor are processed, and an actuator signal for the actuating device is generated on the basis thereof, **characterized in that**
depending on the different driving state of the agricultural utility vehicle, different damping of yawing oscillations occurring at the distributor linkage (12) about the vertical axis is set, wherein the setting of different damping is effected by setting a different control parameter depending on the driving state.

12. Method according to Claim 11,
**characterized in that**
damping of yawing oscillations, occurring at the distributor linkage (12), about the vertical axis is set as a function of at least one driving state, in particular straight-ahead travel or cornering, of the agricultural utility vehicle; in particular wherein during cornering, in particular in the case of a change in the turning ranges, different, in particular higher, damping is set than in another driving state, in particular straight-ahead travel.

13. Method according to one of Claims 11 to 12, **characterized in that**
the damping is set according to the principle of a two-point controller for influencing the damping characteristic, wherein a discrete damping value is respectively specified for each of two different driving states of the agricultural utility vehicle.

14. Method according to one of Claims 11 to 13, **characterized in that**
the damping is set according to the principle of skyhook control for influencing the damping characteristic, in particular wherein the damping is set according to the principle of skyhook control, depending on the driving state, in order to influence the damping characteristic;
in particular wherein:
a necessary damping force for damping yawing oscillations, occurring at the distributor linkage (12), about the vertical axis is determined by means of a skyhook damping force, wherein a skyhook parameter is set by means of a constant value; or a necessary damping force for damping yawing oscillations, occurring at the distributor linkage (12), about the vertical axis is determined by means of a skyhook damping force, wherein a skyhook parameter is set to a minimum or maximum value by means of a two-point controller; or
a necessary damping force for damping yawing oscillations, occurring at the distributor linkage (12), about the vertical axis is determined by means of a skyhook damping force, wherein a skyhook parameter is set continuously.

15. Method according to one of Claims 11 to 14, **characterized in that** when a limiting value is exceeded, the damping is set as a function of the driving state on the basis of the measurement data of the sensors.

## Revendications

1. Système de commande et/ou de régulation pour un véhicule utilitaire agricole qui comprend une rampe de distribution (12) pour épandre des matières telles que des engrais, des agents phytosanitaires ou des semences, qui s'étend transversalement à la direction de conduite et qui présente une partie centrale (2) et deux bras latéraux (3) connectés à la partie centrale (2) par des articulations, avec plusieurs portions de rampe (4) connectées par des articulations, pouvant être rabattues les unes sur les autres dans une position de transport et pouvant être dépliées dans une position de travail, au moins un dispositif de réglage étant associé à la rampe de distribution (12), de sorte que la rampe de distribution (12) soit disposée de manière à pouvoir pivoter autour d'un axe vertical, et au moins un capteur étant associé au véhicule utilitaire et le système présentant une unité de traitement de données qui est configurée de manière à ce que les signaux du capteur soient traités et qu'un signal de réglage pour le dispositif de réglage soit généré sur la base de ces signaux,
**caractérisé en ce que**
l'unité de traitement de données est configurée de telle sorte qu'en fonction de l'état de conduite différent du véhicule utilitaire agricole, un amortissement différent des oscillations de lacet autour de l'axe vertical se produisant au niveau de la rampe de distribution (12) puisse être ajusté, l'ajustement d'un amortissement différent s'effectuant en fonction de l'état de conduite par le biais de l'ajustement d'un paramètre de réglage différent.

2. Système selon la revendication 1,
**caractérisé en ce que**
l'unité de traitement de données est configurée de telle sorte qu'un amortissement des oscillations de lacet autour de l'axe vertical se produisant au niveau de la rampe de distribution (12) puisse être ajusté en fonction d'au moins un état de conduite du véhicule utilitaire agricole.

3. Système selon l'une quelconque des revendications précédentes,
**caractérisé en ce que**
l'au moins un état de conduite inclut une conduite en ligne droite et/ou une conduite en virage du véhicule utilitaire agricole, en particulier dans le cas d'une conduite en virage, en particulier dans le cas d'un changement du rayon de courbure, un amortissement différent, en particulier plus important que dans le cas d'un autre état de conduite, en particulier une conduite en ligne droite, pouvant être ajusté.

4. Système selon l'une quelconque des revendications précédentes,
**caractérisé en ce que**
l'amortissement peut être ajusté selon le principe d'un régulateur à deux points pour influencer la caractéristique d'amortissement, une valeur d'amortissement discrète étant à chaque fois prédéfinie pour deux états de conduite différents du véhicule utilitaire agricole.

5. Système selon l'une quelconque des revendications 1 à 3,
**caractérisé en ce que**
l'amortissement peut être ajusté selon le principe d'une régulation Skyhook pour influencer la caractéristique d'amortissement, en particulier l'amortissement pouvant être ajusté en fonction de l'état de conduite selon le principe d'une régulation Skyhook pour influencer la caractéristique d'amortissement.

6. Système selon la revendication 5,
**caractérisé en ce**
**qu'**une force d'amortissement nécessaire pour l'amortissement d'oscillations de lacet autour de l'axe vertical se produisant au niveau de la rampe de distribution (12) peut être déterminée par une force d'amortissement Skyhook, un paramètre Skyhook pouvant être ajusté au moyen d'une valeur constante ; ou
une force d'amortissement nécessaire pour l'amortissement d'oscillations de lacet autour de l'axe vertical se produisant au niveau de la rampe de distribution (12) peut être déterminée par une force d'amortissement Skyhook, un paramètre Skyhook pouvant être ajusté au moyen d'un régulateur à deux points à une valeur minimale ou maximale ; ou
une force d'amortissement nécessaire pour l'amortissement des oscillations de lacet autour de l'axe vertical se produisant au niveau de la rampe de distribution (12) peut être déterminée par une force d'amortissement Skyhook, un paramètre Skyhook pouvant être ajusté de manière continue.

7. Système selon l'une quelconque des revendications précédentes,
**caractérisé en ce que**
l'état de conduite peut être détecté au moyen de l'au moins un capteur, le capteur étant réalisé pour détecter une vitesse de rotation de la rampe de distribution (12) et/ou du véhicule utilitaire autour de l'axe vertical et/ou pour détecter une déviation de la rampe de distribution (12) et/ou pour détecter un angle de direction du véhicule utilitaire et étant associé au véhicule utilitaire agricole.

8. Système selon l'une quelconque des revendications précédentes,
**caractérisé en ce que**
sur la base des données de mesure des capteurs, dans le cas d'un dépassement d'une valeur limite, l'amortissement peut être ajusté en fonction de l'état de conduite.

9. Système selon l'une quelconque des revendications précédentes,
**caractérisé en ce que**
le dispositif de réglage comprend au moins un cylindre hydraulique (10a,b), une conduite hydraulique (11) qui est raccordée au cylindre hydraulique (10a,b) pour l'alimentation en liquide hydraulique, et au moins une unité de soupape hydraulique et/ou d'autres dispositifs d'amortissement, l'unité de soupape pouvant être à chaque fois ajustée par le biais d'un signal de réglage de l'unité de traitement de données ;
en particulier dans lequel :
l'unité de soupape hydraulique contient au moins une soupape dans le groupe des soupapes à plusieurs voies (19) et/ou des soupapes de régulation de la pression (18) et/ou des soupapes proportionnelles (22) et/ou des papillons d'étranglement (21) et/ou des diaphragmes pour la régulation de la pression hydraulique et/ou pour l'adaptation de l'amortissement ; et/ou les dispositifs d'amortissement supplémentaires comprennent un accumulateur (20) et un diaphragme réglable et/ou un accumulateur (20) et une soupape proportionnelle (22) et/ou au moins un papillon d'étranglement réglable (21) et/ou au moins deux soupapes proportionnelles (22) et/ou un amortisseur de réglage et/ou des ressorts pour l'adaptation du taux d'amortissement.

10. Véhicule utilitaire agricole pour épandre des matières telles que des engrais, des agents phytosanitaires ou des semences, comprenant un système de commande et/ou de régulation selon l'une quelconque des revendications précédentes.

11. Procédé de commande et/ou de régulation d'un véhicule utilitaire agricole qui comprend un système de commande et/ou de régulation et une rampe de distribution (12) pour épandre des matières telles que des engrais, des agents phytosanitaires ou des semences, qui s'étend transversalement à la direction de conduite et qui présente une partie centrale (2) et deux bras latéraux (3) connectés à la partie centrale (2) par des articulations, avec plusieurs portions de rampe (4) connectées par des articulations, pouvant être rabattues les unes sur les autres dans une position de transport et pouvant être dépliées dans une position de travail, au moins un dispositif de réglage étant associé à la rampe de distribution (12), de sorte que la rampe de distribution (12) soit disposée de manière à pouvoir pivoter autour d'un axe vertical, et au moins un capteur étant associé au véhicule utilitaire et le système présentant une unité de traitement de données qui est configurée de manière à ce que les signaux du capteur soient traités et qu'un signal de réglage pour le dispositif de réglage soit généré sur la base de ces signaux,
**caractérisé en ce**
**qu'**en fonction de l'état de conduite différent du véhicule utilitaire agricole, un amortissement différent des oscillations de lacet autour de l'axe vertical se produisant au niveau de la rampe de distribution (12) est ajusté, l'ajustement d'un amortissement différent s'effectuant en fonction de l'état de conduite par le biais de l'ajustement d'un paramètre de réglage différent.

12. Procédé selon la revendication 11,
**caractérisé en ce**
**qu'**un amortissement d'oscillations de lacet autour de l'axe vertical se produisant au niveau de la rampe de distribution (12) est ajusté en fonction d'au moins un état de conduite, en particulier d'une conduite en ligne droite ou d'une conduite en virage, du véhicule utilitaire agricole ; en particulier dans le cas d'une conduite en virage, en particulier dans le cas d'un changement du rayon de courbure, un amortissement différent, en particulier plus important que dans le cas d'un autre état de conduite, en particulier une conduite en ligne droite, étant ajusté.

13. Procédé selon l'une quelconque des revendications 11 et 12,
**caractérisé en ce que**
l'amortissement est ajusté selon le principe d'un régulateur à deux points pour influencer la caractéristique d'amortissement, une valeur d'amortissement discrète étant à chaque fois prédéfinie pour deux états de conduite différents du véhicule utilitaire agricole.

14. Procédé selon l'une quelconque des revendications 11 à 13,
**caractérisé en ce que**
l'amortissement est ajusté selon le principe d'une régulation Skyhook pour influencer la caractéristique d'amortissement ; en particulier l'amortissement est ajusté en fonction de l'état de conduite selon le principe de la régulation Skyhook pour influencer la caractéristique d'amortissement ;
en particulier dans lequel
une force d'amortissement nécessaire pour l'amortissement d'oscillations de lacet autour de l'axe vertical se produisant au niveau de la rampe de distribution (12) est déterminée par une force d'amortissement Skyhook, un paramètre Skyhook étant ajusté au moyen d'une valeur constante ; ou
une force d'amortissement nécessaire pour l'amortissement d'oscillations de lacet autour de l'axe vertical se produisant au niveau de la rampe de distribution (12) est déterminée par une force d'amortissement Skyhook, un paramètre Skyhook étant ajusté au moyen d'un régulateur à deux points à une valeur minimale ou maximale ; ou
une force d'amortissement nécessaire pour l'amortissement des oscillations de lacet autour de l'axe vertical se produisant au niveau de la rampe de distribution (12) est déterminée par une force d'amortissement Skyhook, un paramètre Skyhook étant ajusté de manière continue.

15. Procédé selon l'une quelconque des revendications 11 à 14,
**caractérisé en ce que** sur la base des données de mesure des capteurs, dans le cas d'un dépassement d'une valeur limite, l'amortissement est ajusté en fonction de l'état de conduite.
